**Europäisches Patentamt**

**European Patent Office**

**Office européen des brevets**

(19)

(11)   **EP 1 219 912 A1**

(12)   **EUROPÄISCHE PATENTANMELDUNG**

(43) Veröffentlichungstag:
    **03.07.2002  Patentblatt 2002/27**

(51) Int Cl.⁷: **F28B 1/00**, B01D 5/00

(21) Anmeldenummer: **01129824.7**

(22) Anmeldetag: **14.12.2001**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **30.12.2000  DE 10065797**

(71) Anmelder: **Creavis Gesellschaft für Technologie
    und Innovation mbH
    45772 Marl (DE)**

(72) Erfinder:
    • **Roos, Martin, Dr.
      45721 Haltern (DE)**
    • **Oles, Markus, Dr.
      45525 Hattingen (DE)**
    • **Schleich, Bernhard, Dr.
      45667 Recklinghausen (DE)**
    • **Nun, Edwin, Dr.
      48727 Billerbeck (DE)**

(54)    **Vorrichtung zur Kondensationsbeschleunigung mit Hilfe strukturierter Oberflächen**

(57)    Vorrichtung zur Kondensation eines Gases auf einer Oberfläche, wobei die Oberfläche zur Kondensation des Gases Erhebungen einer mittleren Höhe von 50 nm bis 1 mm und einem mittleren Abstand von 50 nm bis 1 mm aufweist.

**EP 1 219 912 A1**

## Beschreibung

Die Erfindung betrifft Vorrichtungen zur Kondensation von Gasen. Für viele technische Prozesse ist das Kondensationsverhalten eines Dampfes/Gases eine wichtige Kenngröße. Unter Kondensation ist die Phasenumwandlung eines Elementes oder einer Verbindung von einer gasförmigen in eine flüssige Phase zu verstehen.

Dabei sind folgende Rahmenbedingungen — hier am Beispiel des Systems Wasser/Luft, d. h. der Luftfeuchtigkeit, beschrieben — nötig. In der freien atmosphärischen Luft ist ein gewisser Prozentsatz von Wasserdampf vorhanden. Dieser Wasserdampf wird als Luftfeuchtigkeit bezeichnet. Das Verhältnis von Masse des im Luftvolumen enthaltenen Wasserdampfes zum Luftvolumen wird als absolute Luftfeuchtigkeit bezeichnet. Viel wichtiger ist aber die sogenannte relative Luftfeuchtigkeit. Die relative Luftfeuchtigkeit ist als Masse des im Luftvolumen enthaltenen Wasserdampfes zur Masse des Wasserdampfes im Luftvolumen bei Sättigung definiert und kann durch folgende Formel beschrieben werden:

$$\varphi = \frac{P_D}{P_S} = \frac{f}{f_{max}}$$

Mit $\varphi$ = relative Feuchte; $P_D$ = Wasserdampfpartialdruck; $P_s$ = Sättigungsdampfdruck; $f$ = absolute Feuchte; $f_{max}$ = maximale Feuchte.

Eine relative Luftfeuchtigkeit von 100 % bedeutet somit, dass der Wasserdampfpartialdruck gleich dem Sättigungsdampfdruck des Wassers bei gegebener Temperatur und Druck ist. Aus der Thermodynamik ist bekannt, dass zwei Phase im Gleichgewicht nebeneinander bestehen können, wenn ihre chemischen Potentiale gleich sind. So können Flüssig-Phase und Dampf-Phase nur bei einem bestimmten, von der Temperatur abhängigen Druck, nebeneinander bestehen.

Kondensationsprozesse finden bei vielen technischen Prozessen wie z. B. Destillationen, Reaktivdestillationen, Kühlwasserkreisläufe in Kraftwerksturbinen, Aufarbeitung von wässrigen oder organischen Lösungen durch Abziehen des Lösungsmittels Verwendung und spielen daher eine große technische Rolle.

Die Energiebilanz ist hier ein wichtiges wirtschaftliches Kriterium, d. h. je weniger Energie zur Kondensation einer Flüssigkeit benötigt wird, desto ökonomischer der Kondensationsprozess. Dieser Prozess kann am Beispiel der Kondensation von Wasserdampf aus Luft wie folgt beschrieben werden:

Eine Oberfläche (Kondensator) wird gegenüber der umgebenden Gasphase gekühlt. In der unmittelbaren Nähe der Oberfläche kommt es zu einer Abkühlung des Gases und des Wasserdampfes. Hierbei kann bei konstant gehaltenem Druck der vorhandene Druck des Wasserdampfpartialdruckes, den zu der tieferen Temperatur gehörenden Sättigungsdampfdruck, überschreiten. In diesem Fall tritt eine Kondensation ein, die zu einem Niederschlag von Wasser auf der Oberfläche führt. Der auf der Oberfläche vorhandene Tropfen führt nun Wärme auf die Oberfläche ab und kühlt so ab. Dieser Übergang von Wärme muss bei vielen Kondensationsapparaturen kompensiert werden. Es ist also nötig, die Kondensationsfläche ständig neu zu kühlen. Die Kühlung dieser Flächen ist ein sehr energieintensiver Prozess. Je länger und je mehr Kondensat auf der Oberfläche verweilt, desto mehr Energie gibt das Kondensat an die Oberfläche ab. Wünschenswert ist es also, den Wassertropfen mit möglichst hoher Temperatur möglichst schnell von der Oberfläche wegzuführen.

Aufgabe der vorliegenden Erfindung war es daher, den Kondensationsprozeß, d. h. die Kondensation eines Dampfs bis zum Sammeln der so erzeugten Flüssigkeit ökonomischer zu gestalten.

Überraschend wurde gefunden, dass dies mit Hilfe einer strukturierten Oberfläche möglich ist.

Gegenstand der vorliegenden Erfindung ist daher eine Vorrichtung zur Kondensation eines Gases auf einer Oberfläche, wobei die Oberfläche zur Kondensation des Gases Erhebungen einer mittleren Höhe von 50 nm bis 1 mm und einem mittleren Abstand von 50 nm bis 1 mm aufweist.

Die Erhebungen können regelmässig oder stochastisch angeordnet sein. Weiterhin können die Erhebungen eine mittlere Höhe von 500 nm bis 50 μm aufweisen.

Die Oberflächenenergie kann zwischen 5 und 20 mN/m, bevorzugt 10-20 mN/m betragen. Höhere Oberflächenenergien wie 20-40 mN/m sind ebenfalls möglich, aber in der Regel, d. h. z. B. zur Kondensation von Wasser nicht notwendig.

Strukturierte Oberflächen sind unter dem Namen Lotus-Oberflächen bekannt und z. B. in DE 198 03 787 oder WO 96/104 123 beschrieben. Hier wird die selbstreinigende Wirkung der strukturierten Oberflächen beschrieben.

Oberflächen der erfindungsgemäßen Vorrichtung, an denen die Kondensation des Dampfes stattfindet, weisen einen sehr geringen Abrollwinkel für Flüssigkeiten, d. h. hier für das Kondensat auf. Sobald ein kondensierter Tropfen einmal in Bewegung ist, rollt er selbständig von der Oberfläche ab und sammelt weitere Tropfen ein; dies gilt auch schon für sehr kleine Tropfen. Hierbei ist eine Tröpfengröße von weniger als 0,5 μl ausreichend. Die Tropfen haften also weniger gut an den Oberflächen und rollen somit schneller von der Oberfläche. Dieses Phänomen bringt thermodynamisch-technisch viele Vorteile. Durch die kürzere Verweildauer des Kondensats auf der Oberfläche kann die Flüssigkeit weniger Wärme an die Oberfläche abgeben, da dieser Prozess proportional zur Temperaturdifferenz und zur Zeit ist. Durch den schnelleren Abtransport des Kondensats von der Oberfläche wird nicht nur weniger Energie übertragen, vielmehr werden auch schneller die sogenannten Kondensationskeime wieder zur Verfügung gestellt.

Die sogenannten Kondensationskeime sind die Entstehungsorte der flüssigen Phase. Die Kondensation innerhalb des Dampfes muss damit anfangen, dass sich zunächst kleine Tropfchen bilden. Der Dampfdruck eines Tröpfchens ist also umso grösser, je kleiner das Tröpfchen ist, so dass bei einer gegebenen Übersättigung nur solche Tröpfchen wachsen können, deren Radius einen bestimmten Wert überschreitet. Alle Tröpfchen mit einem kleineren Radius haben die Tendenz, wieder zu verdampfen. Eine Kondensation des übersättigten Dampfes kann nur erfolgen, wenn zunächst durch eine mit einer Enthropieabnahme verbundene Schwankungserscheinung, ein Keim entstanden ist. Die Häufigkeit dieser Keimbildung ist entscheidend dafür, ob bei gegebener Übersättigung eine Phasenumwandlung von gasförmig zu flüssig zu erwarten ist. Dabei ergibt sich, dass die Häufigkeit in sehr empfindlicher Weise von der Übersättigung des Dampfes/Gases abhängt. In einem relativ engen Bereich der Übersättigung wird die Skala von fast keiner bis sehr häufigen Kondensationen durchlaufen. Ob eine Übersättigung des Dampfes vorliegt oder nicht, hängt stark von den mikroskopischen Umgebungsparametern des Dampfes ab.

Die Kondensationsfläche der vorliegenden Erfindung weist daher bevorzugt einen oder mehrere der folgenden Merkmale auf:

- Neigungswinkel von mindestens 3°, insbesondere mindestens 10°, bevorzugt mindestens 30°, besonders bevorzugt mindestens 45°
- Oberflächenenergie von 5-20 mN/m, bestimmt an einer Oberfläche ohne Erhebungen. (Bestimmt nach Owens et al., J. Appl. Polym. Sci 13, 1741, 1969)
- Material: Polytetrafluorethylen, Polyvinylidenfluorid oder Polymeren aus Perfluoralkoxyverbindungen und/oder Metallen, als einziger Bestandteil, Hauptbestandteil oder als Beschichtung
- Beschichtung aus Fluoralkanen, Alkylfluorsilanen oder fluorierten Vinylverbindungen.

Die erfindungsgemäßen Vorrichtungen können in Kühlanlagen, Destillationsanlagen, Reaktoren, Rückflußkühlern oder Kraftwerkskühlern sowie Klimaanlagen, Raumentfeuchter oder Kühlfallen verwendet werden.

Als Verwendungszweck sind insbesondere Kühl-, Destillations- oder Kondensationsanlagen für alle Elemente und Verbindungen, die einen Phasenübergang von gasförmig nach flüssig besitzen, insbesondere für Wasser, Ethanol, Methanol, MTBE, Kohlenwasserstoffe, Kraftstoffe, Brenngase, Flüssiggase wie $N_2$ oder Luft zu nennen.

**Patentansprüche**

1. Vorrichtung zur Kondensation eines Gases auf einer Oberfläche,
   **dadurch gekennzeichnet,**
   **dass** die Oberfläche zur Kondensation des Gases Erhebungen einer mittleren Höhe von 50 nm bis 1 mm und einem mittleren Abstand von 50 nm bis 1 mm aufweist.

2. Vorrichtung nach Anspruch 1,
   **dadurch gekennzeichnet,**
   **dass** die Oberfläche einen Neigungswinkel von mindestens 3° aufweist.

3. Vorrichtung nach einem der Ansprüche 1 bis 2,
   **dadurch gekennzeichnet,**
   **dass** die Oberfläche ohne Erhebungen eine Oberflächenenergie von 5 bis 20 mN/m aufweist.

4. Vorrichtung nach einem der Ansprüche 1 bis 3,
   **dadurch gekennzeichnet,**
   **dass** die Kondensationsfläche mit Polytetrafluorethylen, Polyvinylidenfluorid oder Polymeren aus Perfluoralkoxyverbindungen beschichtet ist oder aus diesen Materialien besteht.

5. Vorrichtung nach einem der Ansprüche 1 bis 3,
   **dadurch gekennzeichnet,**
   **dass** die Kondensationsfläche aus Metall besteht.

6. Vorrichtung nach einem der Ansprüche 1 bis 5,
   **dadurch gekennzeichnet,**
   **dass** die Kondensationsfläche eine Beschichtung aus Fluoralkanen, Alkylfluorsilanen oder fluorierten Vinylverbindungen aufweist.

7. Vorrichtung nach einem der Ansprüche 1 bis 6,
   **dadurch gekennzeichnet,**
   **dass** die Erhebungen stochastisch angeordnet sind.

8. Verwendung einer Vorrichtung nach einem der Ansprüche 1 bis 7 in Kühlagregaten oder Destillationsanlagen.

9. Verwendung einer Vorrichtung nach einem der Ansprüche 1 bis 7 zur Destillation oder Kondensation von Wasser, Alkohol, Kraftstoff oder Flüssiggasen.

**EP 1 219 912 A1**

Europäisches Patentamt

## EUROPÄISCHER RECHERCHENBERICHT

Nummer der Anmeldung

EP 01 12 9824

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | DE 198 03 787 A (CREAVIS TECH & INNOVATION GMBH) 5. August 1999 (1999-08-05) | 1,3-7 | F28B1/00 B01D5/00 |
| Y | * Spalte 1, Zeile 65 - Spalte 2, Zeile 3; Ansprüche * | 2,8,9 | |
| X | US 4 166 498 A (DAIKOKU TAKAHIRO ET AL) 4. September 1979 (1979-09-04) * Spalte 1, Zeile 4-57 * * Spalte 3, Zeile 52-55 * * Spalte 4, Zeile 40-59; Abbildung 1 * | 1-3,5,8,9 | |
| X | GB 889 157 A (GEN ELECTRIC) 7. Februar 1962 (1962-02-07) * Seite 2, Zeile 51-75 * * Seite 4, Zeile 30-46 * | 1-3,5,8,9 | |
| Y | US 4 358 046 A (DETZ CLIFFORD M ET AL) 9. November 1982 (1982-11-09) | 2,8,9 | |
| A | * Spalte 1, Zeile 14-27 * | 1,3-7 | |
| | | | RECHERCHIERTE SACHGEBIETE (Int.Cl.7) F28B B01D |

Der vorliegende Recherchenbericht wurde für alle Patentansprüche erstellt

| Recherchenort | Abschlußdatum der Recherche | Prüfer |
|---|---|---|
| MÜNCHEN | 19. März 2002 | Persichini, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

4

**EP 1 219 912 A1**

## ANHANG ZUM EUROPÄISCHEN RECHERCHENBERICHT
## ÜBER DIE EUROPÄISCHE PATENTANMELDUNG NR.

EP 01 12 9824

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-03-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE | 19803787 | A | 05-08-1999 | DE | 19803787 | A1 | 05-08-1999 |
| | | | | EP | 0933388 | A2 | 04-08-1999 |
| | | | | JP | 11286047 | A | 19-10-1999 |
| US | 4166498 | A | 04-09-1979 | JP | 1091591 | C | 31-03-1982 |
| | | | | JP | 53008855 | A | 26-01-1978 |
| | | | | JP | 56036347 | B | 24-08-1981 |
| | | | | DE | 2731476 | A1 | 02-02-1978 |
| | | | | GB | 1565103 | A | 16-04-1980 |
| | | | | NL | 7707748 | A | 17-01-1978 |
| GB | 889157 | A | 07-02-1962 | KEINE | | | |
| US | 4358046 | A | 09-11-1982 | CA | 1086154 | A1 | 23-09-1980 |
| | | | | DE | 2811387 | A1 | 21-09-1978 |

EPO FORM P0461

Für nähere Einzelheiten zu diesem Anhang : siehe Amtsblatt des Europäischen Patentamts, Nr. 12/82

5